# EUROPÄISCHE PATENTSCHRIFT

(11) **EP 1 390 235 B1**
(45) Veröffentlichungstag und Bekanntmachung des Hinweises auf die Patenterteilung: **15.09.2004**
(21) Anmeldenummer: 02769413.2
(22) Anmeldetag: 02.03.2002
(51) Int. Cl.: B60R 11/02

(54) **KRAFTFAHRZEUG MIT MEHREREN SITZPLÄTZEN**
MOTOR VEHICLE HAVING A NUMBER OF SEATS
VEHICULE COMPORTANT PLUSIEURS PLACES ASSISES

(30) Priorität: 12.05.2001 DE 10123179
(43) Veröffentlichungstag der Anmeldung: 25.02.2004
(73) Patentinhaber: DaimlerChrysler AG, 70567 Stuttgart (DE)
(72) Erfinder: STREIT, Alexander, 40822 Mettmann (DE)
(86) Internationale Anmeldenummer: PCT/EP2002/002272
(87) Internationale Veröffentlichungsnummer: WO 2002/092392

(56) Entgegenhaltungen:
- DE-A- 4 328 720
- DE-A- 19 958 836
- DE-U- 1 966 556
- GB-A- 2 280 332
- US-A- 5 917 920
- PATENT ABSTRACTS OF JAPAN vol. 015, no. 106 (E-1044), 13. März 1991 (1991-03-13) -& JP 02 312349 A (FUJITSU TEN LTD), 27. Dezember 1990 (1990-12-27)

## Beschreibung

Die Erfindung betrifft ein Kraftfahrzeug mit mehreren Sitzplätzen in einem gemeinsamen Innenraum, insbesondere mit Sitzplätzen in zwei oder mehr Reihen hintereinander.

Auch in sehr komfortablen Personenkraftwagen mit guter akustischer Abschirmung des Innenraumes gegenüber dem Außenraum sowie Fahr- bzw. Betriebsgeräuschen des Fahrzeuges kann eine Unterhaltung zwischen den Insassen akustisch schwierig sein, insbesondere wenn die Insassen auf Plätzen unterschiedlicher Sitzreihen sitzen. Deshalb ist es bei Unterhaltungen zwischen den Insassen geradezu typisch, daß sich hinten bzw. im Fond sitzende Insassen bei Gesprächen mit vorne sitzenden Insassen, beispielsweise Fahrer oder Beifahrer, nach vorne beugen, während sich die vorne sitzenden Insassen oftmals umzuwenden suchen.

Abgesehen davon, daß die Insassen unbequeme Sitzhaltungen einnehmen, ist das vorgenannte Verhalten unter Sicherheitsaspekten unerwünscht, weil alle Insassen im Hinblick auf moderne Sicherheitssysteme, wie insbesondere Airbags und Sicherheitsgurte mit automatischen Gurtstraffern, eine Soll-Sitzposition einnehmen sollten, um eine optimale Wirkung der Sicherheitssysteme zu ermöglichen. Im übrigen ist es in jedem Falle höchst gefährlich, wenn der Fahrer eine für die Beobachtung des Verkehrsgeschehens ungünstige Sitzposition einnimmt.

Für das oben dargestellte Problem wurde bislang keine Lösung angeboten.

Es ist im wesentlichen lediglich bekannt, in Fahrzeugen mit vom übrigen Innenraum durch Glaswand od.dgl. abgetrennter Fahrerkabine eine Wechselsprechanlage vorzusehen, damit bei Bedarf eine Verständigung zwischen dem Fahrer und den von ihm durch die Zwischenwand getrennten Insassen möglich ist.

Außerdem sind Wechselsprechanlagen bekannt, die bei geschlossenen Fahrzeugtüren und -fenstern eine Verständigung zwischen den Insassen und Personen außerhalb des Fahrzeuges ermöglichen.

In der JP 02312349 A wird ein Innenraum-Kommunikationssystem in einem Kraftfahrzeug beschrieben, bei dem ein Mikrofon in der Nähe des Fahrersitzes Sprache des Fahrers aufnimmt und auf einem in der Nähe eines Fondsitzes angeordneten Lautsprecher ausgibt. Sprache eines Fondpassagiers auf dem Fondsitz wird durch ein in der Nähe des Fondsitzes angeordnetes Mikrofon aufgenommen und auf einem Lautsprecher in der Nähe des Fahrersitzes ausgegeben.

In der gattungsbildenden GB 2280332 A wird ein Rundfunk-, Cassetten- und CD-System in einem Kraftfahrzeug beschrieben, über das ein Innenraum-Kommunikationssystem realisiert wird.

Der Erfindung liegt also die Aufgabe zugrunde, die akustische Verständigung zwischen den Fahrzeuginsassen zu verbessern.

Diese Aufgabe wird erfindungsgemäß gelöst durch ein Krafsfahrzeug mit den Merkmalen des Anspruchs 1.

Die Erfindung beruht auf dem allgemeinen Gedanken, elektroakustische Systeme zur Verbesserung der sprachlichen Verständigungsmöglichkeiten zwischen den Fahrzeuginsassen einzusetzen und vorzugsweise so anzuordnen, daß ein Optimum der Verständigungsmöglichkeiten erreicht wird, wenn die Insassen ihre Soll-Sitzposition relativ zu Sicherheitssystemen, wie insbesondere Airbags und Sicherheitsgurte mit automatischen Gurtstraffern, einnehmen. Neben seiner unmittelbaren Zweckbestimmung, nämlich Verbesserung der akustischen Verständigungsmöglichkeiten, erfüllt das erfindungsgemäße Innenraum-Kommunikationssystem einen sehr wichtigen weiteren Zweck, indem die Sicherheit der Insassen im Fahrzeug erhöht wird, weil das Innenraum-Kommunikationssystem allen Insassen ermöglicht, sich in Soll-Sitzposition leise und damit ohne Anstrengung gut verständlich zu unterhalten.

Gemäß der Erfindung ist vorgesehen, das Innenraum-Kommunikationssystem in ein zentral gesteuertes Multifunktionssystem zu integrieren, welches ein Rundfunk- und Audiosystem sowie ein Telefonsystem umfaßt und außerdem unter anderem akustische Warnsysteme umfassen kann.

Auf diese Weise besteht die Möglichkeit, die für heutige Rundfunk- und Audiosysteme in einem Kraftfahrzeug ohnehin vorhandenen Lautsprecher auch für die Innenraumkommunikation heranzuziehen bzw. die gegebenenfalls für das Innenraum-Kommunikationssystem zweckmäßigen zusätzlichen Lautsprecher zur Verbesserung des Klanges des Rundfunk- bzw. Audiosystems zu benutzen. In entsprechender Weise werden die für eine Freisprechanlage des Telefonsystems ohnehin vorhandenen Mikrofone auch für das Innenraum-Kommunikationssystem genutzt. Die für das Innenraum-Kommunikationssystem gegebenenfalls erwünschten zusätzlichen Mikrofone können ihrerseits zur Erweiterung des Telefonsystems herangezogen werden, indem bei Bedarf eine Freisprechmöglichkeit für verschiedene Sitzplätze bzw. Insassen einschaltbar oder auch eine "Konferenzschaltung" zur Gesprächsteilnahme aller Insassen ermöglicht werden kann.

Gegebenenfalls können auch Anschlüsse für Kopfhörer- und Mikrofoneinheiten im Fahrzeug verteilt angeordnet sein, um einzelnen Insassen, insbesondere beim Telefonieren, die Benutzung solcher Einheiten zu ermöglichen.

Grundsätzlich ist es auch möglich, derartige Vorrichtungen für die Kommunikation im Innenraum heranzuziehen.

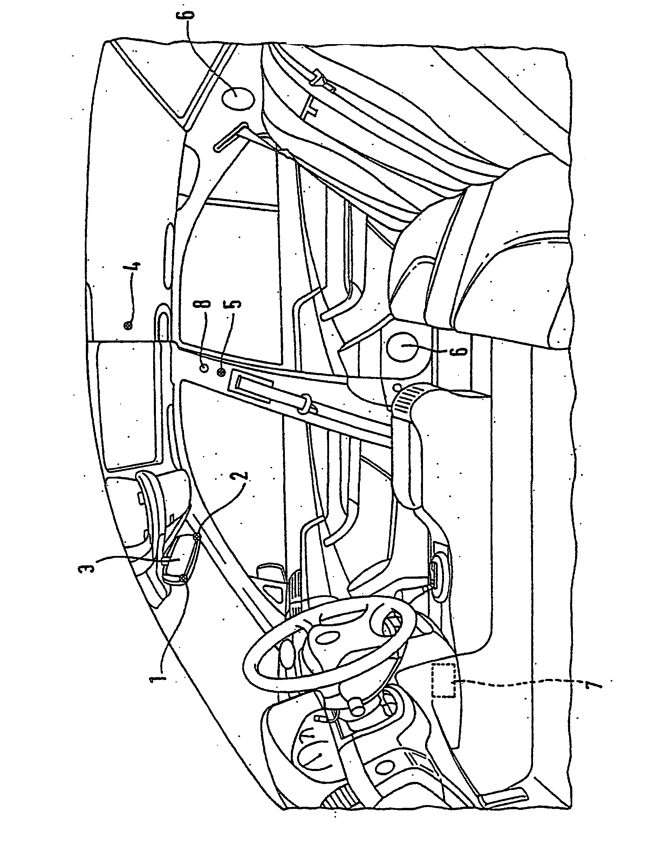

Im übrigen wird hinsichtlich bevorzugter Merkmale der Erfindung auf die Ansprüche sowie die nachfolgende Erläuterung der Zeichnung verwiesen, anhand der eine besonders bevorzugte Ausführungsform näher beschrieben wird.

Dabei zeigt die einzige Figur eine Seitenansicht eines Innenraumes eines Personenkraftwagens, wobei die vorderen Sitze nicht dargestellt und lediglich die Sitze einer hinteren Sitzbank sichtbar sind.

Der in der Zeichnung dargestellte Innenraum eines Personenkraftwagens ist zur Verbesserung der Verständigungsmöglichkeiten zwischen den Insassen mit einem Innenraum-Kommunikationssystem versehen, um insbesondere eine Unterhaltung zwischen dem vorne sitzenden Fahrer bzw. Beifahrer einerseits und den Passagieren auf den hinteren Sitzplätzen andererseits zu verbessern.

Hierzu sind im Innenraum miteinander gekoppelte Mikrofone und Lautsprecher verteilt angeordnet:
Im dargestellten Beispiel sind für Fahrer und Beifahrer jeweils ein Mikrofon 1 und 2 am inneren Rückspiegel 3 nahe der Frontscheibe des Fahrzeuges vorgesehen. Für die hinten sitzenden Passagiere kann ein gemeinsames Mikrofon 4 am Dachhimmel vorgesehen sein. Statt dessen ist es auch möglich, für jeden Insassen auf den hinteren Sitzplätzen ein Mikrofon (nicht dargestellt) auf der Rückseite der Kopfstützen der nicht dargestellten vorderen Sitze anzuordnen. Statt dessen ist es auch möglich, für die hinten sitzenden Passagiere Mikrofone 5 an den B-Säulen der Karosserie vorzusehen.
Die vorgenannten Mikrofone wirken mit Lautsprechern 6 zusammen, wobei die dem Fahrer bzw. Beifahrer zugeordneten Mikrofone 1 und 2 zweckmäßigerweise nur mit solchen Lautsprechern 6 zusammenwirken, die unmittelbar benachbart zu den hinteren Sitzplätzen bzw. den Köpfen der hinten sitzenden Insassen angeordnet sind. Entsprechendes gilt umgekehrt für solche Lautsprecher 6, mit denen vorzugsweise die Mikrofone 4 und 5 der hinten sitzenden Insassen zusammenwirken.
Das Innenraum-Kommunikationssystem besitzt eine den vorgenannten Mikrofonen und Lautsprechern zugeordnete zentrale Steuerung 7, die beispielsweise in oder unter dem Instrumententräger des Fahrzeuges untergebracht sein kann. Diese Steuerung kann so ausgebildet sein, daß sie aus den Mikrofonsignalen "erkennen" kann, ob das jeweilige Mikrofon von Sprachschall oder anderen Geräuschen beaufschlagt wird. Nur bei einer Beaufschlagung mit Sprachschall, insbesondere mit Sprachschall einer gewissen Mindestintensität, werden der bzw. die dem jeweiligen Mikrofon zugeordneten Lautsprecher angesteuert.

Gemäß der Erfindung ist das Innenraum-Kommunikationssystem integriert in ein Multifunktionssystem mit Rundfunk- und Audiosowie Telefonsystem, wobei die Steuerung 7 als Zentralsteuerung für dieses Gesamtsystem ausgebildet ist.

Dabei kann die Steuerung nach vorgegebenen bzw. vorgebbaren Prioritäten arbeiten:

Bei normalem Rundfunk- oder Audiobetrieb können alle im Fahrzeug vorhandenen Lautsprecher 6 entsprechend einem optimalen Raumklang genutzt werden.

Sobald die zentrale Steuerung 7 merkt, daß eines der den Insassen zugeordneten Mikrofone 1,2,4 und 5 mit Sprachschall beaufschlagt wird, können die akustische Lautstärke der Rundfunksendung bzw. Audiodarbietung automatisch zurückgenommen und der oder die Lautsprecher, der bzw. die dem jeweils von Sprachschall beaufschlagten Mikrofon zugeordnet ist bzw. sind, angesteuert werden, um den Sprachbeitrag des jeweiligen Insassen für die anderen Mitfahrer besser hörbar zu machen.

Bei Herstellung einer Telefonverbindung können Rundfunk- und Audiodarbietungen automatisch stumm geschaltet werden. Darüber hinaus kann ein dem jeweiligen Telefongesprächsteilnehmer benachbartes Mikrofon wirksam geschaltet werden, während die übrigen Mikrofone unwirksam werden. Außerdem können dem Platz des jeweiligen Telefongesprächsteilnehmers benachbarte Lautsprecher ausschließlich oder verstärkt wirksam werden. Auf diese Weise wird dem Telefongesprächsteilnehmer im Fahrzeug eine Freisprechmöglichkeit gewährt.

Dabei ist es grundsätzlich auch möglich, mehrere oder alle Insassen im Fahrzeug an einem Telefongespräch teilnehmen zu lassen, indem entsprechend mehrere Mikrofone und die den jeweiligen Sitzplätzen zugeordneten Lautsprecher wirksam werden bzw. bleiben.

Gegebenenfalls können verschiedene Anschlußdosen 8 für eine Kopfhörer- und Mikrofoneinheit vorgesehen sein, die von einem Insassen individuell getragen bzw. benutzt werden kann. Damit wird die Möglichkeit geboten, diesen Insassen ein Telefongespräch führen zu lassen, während die übrigen Insassen ihre normale Sprachkommunikation weiterführen oder das jeweils eingeschaltete Rundfunk- bzw. Audioprogramm hören können.

Die Anschlußdosen 8 können so ausgebildet sein, daß die zentrale Steuerung 7 erkennen kann, ob eine Kopfhörer- und Mikrofoneinheit angeschlossen ist oder nicht. Dies kann beispielsweise durch einen der jeweiligen Anschlußdose 8 zugeordneten Signalgeber oder dadurch erfolgen, daß die Kopfhörer- und Mikrofoneinheit ihrerseits ein Signal erzeugt, beispielsweise nach Erhalt eines "Aufrufsignales" von der zentralen Steuerung 7.

Auf diese Weise besteht die Möglichkeit, das Telefonsystem bei eingesteckter Kopfhörer- und Mikrofoneinheit automatisch so zu schalten, daß bei Telefonaten vorzugsweise die vorgenannte Einheit wirksam geschaltet wird.

## Patentansprüche

1. Kraftfahrzeug mit mehreren Sitzplätzen in einem gemeinsamen Innenraum, insbesondere mit Sitzplätzen in zwei oder mehr Reihen hintereinander, umfassend ein Innenraum-Kommunikationssystem mit zumindest einem Mikrofon (1,2,4,5) in Zuordnung zu einem ersten Sitzplatz oder einer ersten Sitzplatzgruppe sowie zumindest einem mit dem Mikrofon gekoppelten Lautsprecher (6) in Zuordnung zu einem zweiten Sitzplatz oder einer zweiten Sitzplatzgruppe, wobei das Innenraum-Kommunikationssystem mit einem Multifunktionssystem mit Rundfunk- und Audiosystem zu einem durch zentrale Steuerung (7) gesteuerten Großsystem zusammengefaßt ist, wobei für das Innenraum-Kommunikationssystem vorgesehene Lautsprecher auch für verschiedene Subsysteme nutzbar sind,
**dadurch gekennzeichnet,**
**daß** das Multifunktionssystem zusätzlich ein Telefonsystem mit Freisprechanlage umfaßt, dessen Mikrofone auch für das Innenraum-Kommunikationssystem genutzt werden.

2. Kraftfahrzeug nach Anspruch 1,
**dadurch gekennzeichnet,**
**daß** jedem sitz bzw. jeder Sitzplatzgruppe ein gesondertes Mikrofon (1,2,4,5) und/oder ein gesonderter Lautsprecher (6) zugeordnet ist.

3. Kraftfahrzeug nach Anspruch 1 oder 2,
**dadurch gekennzeichnet,**
**daß** das Mikrofon bzw. die Mikrofone (1,2,4,5) und/oder der Lautsprecher bzw. die Lautsprecher (6) mit Richtwirkung mit maximaler Empfindlichkeit bzw. maximalem schallpegel aus bzw. in Richtung von Soll-Sitzpositionen der Insassen arbeiten.

4. Kraftfahrzeug nach einem der Ansprüche 1 bis 3,
**dadurch gekennzeichnet,**
**daß** auf der in Rückwärtsrichtung des Fahrzeuges weisenden Seite von Kopfstützen an vorderen Sitzen ein Mikrofon bzw. Mikrofone und/oder ein Lautsprecher bzw. Lautsprecher für dahinter sitzende Insassen angeordnet sind.

5. Kraftfahrzeug nach einem der Ansprüche 1 bis 4,
**dadurch gekennzeichnet,**
**daß** verschiedene Anschlußdosen (8) für eine Kopfhörer- und Mikrofoneinheit vorgesehen sind.

## Claims

1. Motor vehicle having a number of seats in a common passenger compartment, in particular having seats in two or more rows one behind another, comprising a passenger compartment communication system having at least one microphone (1, 2, 4, 5) assigned to a first seat or a first group of seats, and having at least one speaker (6) which is coupled to the microphone and is assigned to a second seat or a second group of seats, the passenger compartment communication system having a multifunctional system with a radio and audio system being combined to form a large system controlled by a central controller (7), it being possible for speakers which are provided for the passenger compartment communication system also to be used for various subsystems, **characterized in that** the multifunctional system additionally comprises a telephone system with a hands-free system, the microphones of which are also used for the passenger compartment communication system.

2. Motor vehicle according to Claim 1, **characterized in that** a separate microphone (1, 2, 4, 5) and/or a separate speaker (6) is/are assigned to each seat or each group of seats.

3. Motor vehicle according to Claim 1 or 2, **characterized in that** the microphone or the microphones (1, 2, 4, 5) and/or the speaker or the speakers (6) operate directionally with maximum sensitivity and maximum sound level from or in the direction of desired sitting positions of the occupants.

4. Motor vehicle according to one of Claims 1 to 3, **characterized in that** a microphone or microphones and/or a speaker or speakers are arranged on that side of front-seat head restraints which faces in the rearward direction of the vehicle, for occupants sitting behind them.

5. Motor vehicle according to one of Claims 1 to 4, **characterized in that** various connecting sockets (8) are provided for a head-set and microphone unit.

## Revendications

1. Véhicule automobile comportant plusieurs places assises dans un habitacle commun, notamment des places assises en deux ou plusieurs rangées placées les unes derrière les autres, comprenant un système de communication d'habitacle comportant au moins un micro (1, 2, 4, 5) associé à une première place assise ou à un premier groupe de places assises ainsi qu'au moins un haut-parleur (6) couplé au micro et associé à une deuxième place assise ou à un deuxième groupe de places assises, le système de communication d'habitacle étant rattaché à un système multifonctionnel à système radio et audio pour former un grand système contrôlé par commande centrale (7), les haut-parleurs prévus pour le système de communication d'habitacle étant aussi utilisables pour différents sous-systèmes, **caractérisé en ce que** le système multifonctionnel comprend en plus un système téléphonique avec une installation de conversation libre dont les micros sont aussi utilisés pour le système de communication d'habitacle.

2. Véhicule automobile selon la revendication 1,
**caractérisé en ce qu'**à chaque siège ou groupe de places assises est associé un micro spécial (1, 2, 4, 5) et/ou un haut-parleur spécial (6).

3. Véhicule automobile selon la revendication 1 ou 2, **caractérisé en ce que** le micro ou les micros (1, 2, 4, 5) et/ou le haut-parleur ou les haut-parleurs (6) fonctionnent avec effet directeur avec une sensibilité maximale ou un niveau sonore maximal depuis ou vers les positions assises théoriques des passagers.

4. Véhicule automobile selon l'une quelconque des revendications 1 à 3, **caractérisé en ce que**, sur le côté tourné dans la direction arrière du véhicule des appuie-tête des sièges avant, sont disposés un micro ou des micros et/ou un haut-parleur ou des haut-parleurs pour les passagers assis derrière.

5. Véhicule automobile selon l'une quelconque des revendications 1 à 4, **caractérisé en ce que** différentes prises de raccordement (8) pour une unité à écouteurs et à micro sont prévues.
